# EUROPEAN PATENT APPLICATION

(11) **EP 2 071 809 A1**
(43) Date of publication of application: **17.06.2009**
(21) Application number: 07291525.9
(22) Date of filing: 13.12.2007
(51) Int. Cl.: H04L 29/08, H04L 29/12

(54) **Method of establishing a connection in a peer-to-peer network with network address translation (NAT)**

(71) Applicant: Alcatel Lucent, 75008 Paris (FR)
(72) Inventor: Hertle, Andreas, 70191 Stuttgart (DE); Pierer, Marcel, 70327 Stuttgart (DE); Tomsu, Marco, DIpl.-Ing., 71254 Ditzingen (DE)
(74) Representative: Zinsinger, Norbert

(57) **Abstract**

The invention concerns method of establishing a connection in a peer-to-peer network (160), and a peer, a telecommunication infrastructure comprising the peer-to-peer network (160), and a computer program product to execute said method. The connection is established between a first peer (61) in a first address realm of the peer-to-peer network (160) and a second peer (62) in a second address realm of the peer-to-peer network (160). In the peer-to-peer network (160), a network address translation is discovered which prevents a direct connection between the first peer (61) and the second peer (62). A third peer of the peer-to-peer network (160) is determined as a relay peer (R). The relay peer (R) relays the connection between the first peer (61) and the second peer (62).

## Description

The present invention relates to a method of establishing a connection in a peer-to-peer network, and a peer, a telecommunication infrastructure comprising a peer-to-peer network, and a computer program product to execute said method.

Network operators (carriers and enterprises) are heavily demanding for lightweight solutions with minimum CAPEX/OPEX to remain competitive and to bolster up customer ownership (CAPEX = Capital Expenditure; OPEX = Operational Expenditure).

Low OPEX systems with a minimum centralised infrastructure often use highly distributed databases in overlay networks. An overlay network, e.g., a peer-to-peer (= P2P) network, is a virtual network on top of an existing IP network (IP = Internet Protocol). Modern P2P systems, like Chord, organise the participating peers in a graph, a structure of nodes and edges. A node stands for a participating peer and an edge for a neighbour relationship between two peers. Each peer in an overlay has a unique identifier (peer ID or node ID) that defines its position in the overlay (ID = identifier/identification). Peers that are neighbours are connected via a direct IP connection. A well structured overlay is necessary for efficient routing and lookup mechanisms. Messages can be sent to other peers via the overlay, without knowing the IP address of the destination peer.

Network Address Translation (= NAT) routers cause well-known problems to the connection establishment in P2P networks: Each participant (peer) in the P2P overlay can either reside in the public IP address realm or in a private IP address realm behind one or more NAT devices. It is assumed that a high percentage of user internet nodes are behind a NAT router. Peers in a private realm are not directly reachable from the public realm or from a different private realm. As collaboration of the involved NAT devices can not be guaranteed, a NAT traversal solution is required that relies on a prediction of NAT behaviour instead of a collaboration with the NAT device.

It is the object of the present invention to improve an establishment of a connection in a P2P network with NAT.

The object of the present invention is achieved by a method of establishing a connection between a first peer in a first address realm of a peer-to-peer network and a second peer in a second address realm of the peer-to-peer network, whereby the method comprises the steps of discovering in the peer-to-peer network a network address translation preventing a direct connection between the first peer and the second peer, determining a third peer of the peer-to-peer network as a relay peer, and relaying, by the relay peer, the connection between the first peer and the second peer. The object of the present invention is further achieved by a peer of a peer-to-peer network comprising one or more peers in a first address realm of the peer-to-peer network and one or more peers in a second address realm of the peer-to-peer network, whereby the peer comprises discovering means adapted to discover, in the peer-to-peer network, a network address translation preventing a direct connection between the peer and a peer of another address realm, determination means adapted to determine a peer of the peer-to-peer network as a relay peer, relay means adapted to support a relay of a connection between a first peer in the first address realm of the peer-to-peer network and a second peer in the second address realm of the peer-to-peer network, and propagation means adapted to propagate information, in particular connection information, in the peer-to-peer network. And the object of the present invention is achieved by a telecommunication infrastructure comprising a peer-to-peer network with a first peer in a first address realm of the peer-to-peer network and a second peer in a second address realm of the peer-to-peer network, whereby the telecommunication infrastructure further comprises a network address translation preventing a direct connection between the first peer and the second peer, and a third peer of the peer-to-peer network determined as a relay peer adapted to relay the connection between the first peer and the second peer. Furthermore, the object of the present invention is achieved by a computer program product for establishing a connection in a peer-to-peer network comprising one or more peers in a first address realm of the peer-to-peer network and one or more peers in a second address realm of the peer-to-peer network, whereby the computer program product, when executed by a peer of the peer-to-peer network, performs the steps of discovering, in the peer-to-peer network, a network address translation preventing a direct connection between the peer and a peer of another address realm, determining a peer of the peer-to-peer network as a relay peer, supporting a relay of a connection between a first peer in the first address realm of the peer-to-peer network and a second peer in the second address realm of the peer-to-peer network, and propagating information, in particular connection information, in the peer-to-peer network.

The present invention provides a new possibility to solve the NAT traversal issues in P2P networks. Prior art solutions like Hole Punching, STUN, TURN, and ICE require central server components, thus involving severe disadvantages because central components do not scale with the number of peers in the P2P network and central components increase the OPEX for the service provider (STUN = Simple Traversal of User Datagram Protocol Through Network Address Translation; TURN = Traversal Using Relay NAT; ICE = Interactive Connectivity Establishment).

In contrast to the aforementioned solutions known in the prior art, the present invention minimises the need for central server components by enhancing a structured P2P overlay network with a complete NAT traversal solution.

The minimisation of the need for central server components brings several advantages. First, it means a lower OPEX for the service provider as the resources of the participating users are used to offer the required services. Second, a better scalability is achieved as with more participants in the overlay the number of peers which offer the required services grows also. Third, a P2P network using the present invention shows an increased robustness against Denial-of-Service attacks as there is no central instance that can be targeted.

Whereas the aforementioned prior art solutions do not consider the special requirements and possibilities of a structured P2P overlay (e.g., Chord), the invention enhances structured P2P overlay networks by allowing peers in private address realms to traverse their NAT and to participate in the overlay.

Moreover, the present invention manages on one IP address per peer. Since peers in a P2P network commonly have only one IP address, this means a significant simplification compared with STUN servers and also TURN servers - as TURN is an extension to STUN - which require two IP addresses for the detection of NAT behaviour. Therefore, the integration of the present invention into a common P2P network is plain and simple.

According to the invention, when a peer joins the overlay, the peer interacts with multiple peers to detect its "connection information". The connection information consists of the NAT behaviour, a public endpoint and a private endpoint. For detection of the connection information a protocol similar to STUN is used, but without the need of the second IP address. That way, every peer in the overlay, which resides in the public realm, can offer this service.

According to the invention, when a peer wants to establish a connection to another, the two exchange their connection information via the overlay. That way, a rendezvous server is not necessary. With the exchanged connection information, the two peers attempt to establish a direct connection based on the mechanisms of Hole Punching.

A peer, that has not yet joined the overlay, can not receive the connection information of its connection counterpart. The connection information is routed via the overlay and can only be addressed at peers that have already joined the overlay. Therefore the joining peer needs assistance of a peer that has already joined the overlay. That peer relays the messages needed for connection establishment between the joining peer and the overlay.

According to the invention, the two peers that want to establish a connection request, if a direct connection attempt fails, assistance from a third peer that will be relaying messages between the two. The two peers establish direct connections to the relaying peer. Preferably, the relaying peer has already established a direct connection to one of the two peers. The re-use of already established direct connections helps minimising the effort of connection establishment.

Further advantages are achieved by the embodiments of the invention indicated by the dependent claims.

According to a preferred embodiment of the invention, the discovery of said network address translation is based on a topology of the peer-to-peer network and on connection information. Each peer of the P2P network has its own connection information specific for the peer. A peer that is already integrated into the overlay of the P2P network can be reached via the connection information. Preferably, peer-specific connection information comprises a NAT type specifying a NAT associated with the peer, one or more self perceived endpoints, and one or more UNSAF derived endpoints (UNSAF = Unilateral Self Address Fixing). Preferably, peer-specific connection information also comprises one or more relay candidates.

A NAT type is represented by a mapping behaviour (no mapping, EIM, ADM, PDM), filtering behaviour (EIF, ADF, PDF) and hairpin translation (possible, impossible) (EIM = Endpoint Independent Mapping; ADM = Address Dependent Mapping; PDM = Address and Port Dependent Mapping; EIF = Endpoint Independent Filtering; ADF = Address Dependent Filtering; PDF = Address and Port Dependent Filtering). Self perceived endpoints are tuples of IP address and port, which are discovered using methods of the local operating system. UNSAF derived endpoints are tuples of IP address and port, which are discovered via an UNSAF mechanism (e.g. STUN). If a peer is not NATed, i.e., is not located behind a NAT device, UNSAF derived endpoints are equal to self perceived endpoints. Relay candidates represent peers of the P2P network that offer relay services. Candidates are identified by a peer ID of such a peer and a set of heuristic values that are used to rate relay candidates.

Preferably, the discovery of said network address translation is based on connection information comprising a specification of a behaviour of the discovered network address translation, an endpoint associated with the first peer in the first address realm, and an endpoint associated with the second peer in the second address realm.

According to another preferred embodiment of the invention, the first peer and the second peer exchange their respective connection information between the first peer and the second peer in a hop-by-hop routing via one or more other peers of the peer-to-peer network.

If a connection needs to be established between two peers, both peers need to exchange the connection information gathered previously. The connection information is exchanged via the P2P overlay. To ensure minimal impact on the network, only two messages are sent: a connection request and a connection response. The connection request message contains the connection information of the requesting peer, i.e., the first peer, and a connection ID. The connection ID is used for identification of messages that belong to this attempt to establish a connection. The connection response needs to contain the same connection ID as the connection request. Usually, the connection response contains the connection information of the responding peer, i.e., the second peer. If not, the connection response has to be interpreted as a decline to the connection request. The connection request can be declined if the responding peer cannot establish a connection for some reason, e.g., because the responding peer is leaving the P2P network or has reached its connection limit.

According to another preferred embodiment of the invention, the establishment of a relayed connection between the first peer and the second peer via the relay peer is performed through the following steps. A first step is sending, by the first peer, a relayed connection request comprising connection information of the first peer to the relay peer. A next step comprises sending, by the relay peer, a relayed connection response comprising connection information of the relay peer to the first peer. A next step comprises establishing a direct connection between the first peer and the relay peer if no direct connection between the first peer and the relay peer is already established. If a direct connection between the first peer and the relay peer is already established, the step of establishing a direct connection between the first peer and the relay peer is skipped since the direct connection between the first peer and the relay peer needs not be re-established.

A next step comprises sending, by the first peer, a relayed discovered message comprising a peer identifier of the relay peer to the second peer. A next step comprises sending, by the second peer, a relayed connection request comprising connection information of the second peer to the relay peer. A next step comprises sending, by the relay peer, a relayed connection response comprising connection information of the relay peer to the second peer. And a next step comprises establishing a direct connection between the second peer and the relay peer if no direct connection between the second peer and the relay peer is already established. If a direct connection between the second peer and the relay peer is already established, the step of establishing a direct connection between the second peer and the relay peer is skipped since the direct connection between the second peer and the relay peer needs not be re-established.

In a preferred embodiment, the first peer and/or the second peer provide a list containing one or more relay candidates. The relay peer is chosen from this list. The choice may be based on one or more of the following steps: choosing a relay candidate where one or more direct connections that are already established in the peer-to-peer network can be re-used for the relayed connection between the first peer and the second peer; and preferring a relay candidate engaged in less relay connections than another relay candidate. The re-use of existing direct connections when establishing relayed connections reduces the keep-alive traffic that is necessary to create and maintain the overlay network.

According to another preferred embodiment of the invention, the method comprises the step of sending a bootstrapping request comprising connection information of the first peer to a peer in a publicly reachable address realm of the peer-to-peer network whereby the peer in the publicly reachable address realm of the peer-to-peer network serves as a bootstrapping peer. A next step comprises relaying, by the bootstrapping peer, messages exchanged between the first peer and the second peer.

Preferably, the termination of a relay connection comprises the following steps. A first step comprises terminating the relayed connection by sending, by the first peer, a de-allocate relay message to the relay peer, the de-allocate relay message declaring the relayed connection unnecessary. A next step comprises forwarding, by the relay peer, the de-allocate relay message received from the first peer to the second peer. A next step comprises sending, by the second peer, a de-allocate relay message to the relay peer. A next step comprises forwarding, by the relay peer, the de-allocate relay message received from the second peer to the first peer. And a next step comprises terminating the relayed connection after receiving the forwarded de-allocate relay message at the first peer.

These as well as further features and advantages of the invention will be better appreciated by reading the following detailed description of presently preferred exemplary embodiments taken in conjunction with accompanying drawings of which:
- Fig. 1: is a block diagram of a peer-to-peer network according to an embodiment of the invention;
- Fig. 2: is a diagram of a bootstrapping service in a peer-to-peer network according to an embodiment of the invention;
- Fig. 3: is a diagram of an establishment of a direct connection in a peer-to-peer network according to an embodiment of the invention;
- Fig. 4: is a diagram of a termination of a direct connection in a peer-to-peer network according to an embodiment of the invention;
- Fig. 5: is a ranked list of relay candidates according to an embodiment of the invention;
- Fig. 6: is a diagram of an establishment of a relayed connection in a peer-to-peer network according to an embodiment of the invention;
- Fig. 7: is a diagram of a termination of a relayed connection in a peer-to-peer network according to an embodiment of the invention; and
- Fig. 8: is a block diagram of peers according to an embodiment of the invention in a peer-to-peer network.

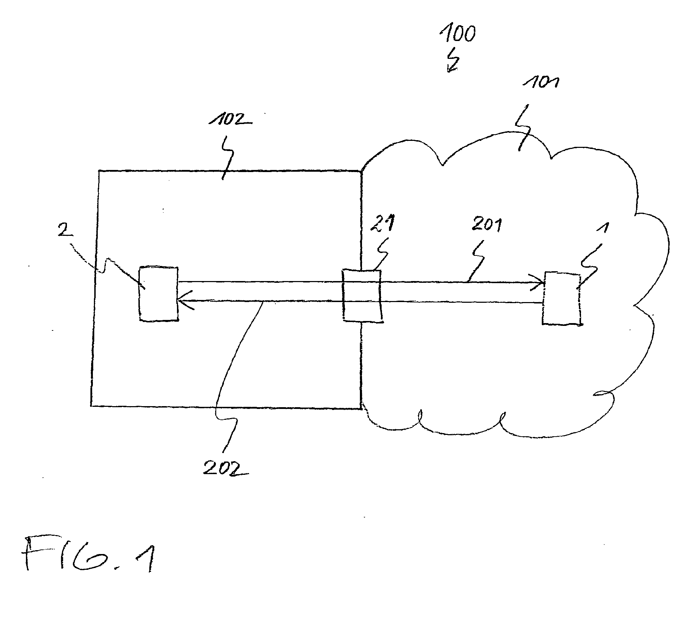

Fig. 1 shows a P2P network 100, e.g., representing a telecommunication infrastructure like a SIP network. The P2P network 100 comprises a first peer 1 offering a UNSAF service in a public address realm 101 of the P2P network 100 and a second peer 2 in a private address realm 102 of the P2P network 100. A NAT device 21, e.g., a home router with NAT, separates the private address realm 102 from the public address realm 101. The second peer 2 is a peer located behind a NAT, i.e., a so-called NAT'ed peer, and reachable from the public address realm 101 via the NAT device 21, only.

The UNSAF service allows peers requesting the UNSAF service to detect if there are any NAT devices between them and a peer offering the UNSAF service. If there is a NAT device, it is possible to detect its behaviour and the public endpoint that was allocated, by the NAT device, to the peer requesting the UNSAF service. This UNSAF service can be considered a light version of STUN: A second IP address is not required in exchange for less accuracy when detecting NAT behaviour. Only peers that reside in the public address realm can offer the UNSAF service. A peer offering this service has to listen for UNSAF requests on a predetermined port.

Before a peer can participate in the overlay network of the P2P network 100, it needs to detect its connection information (= Cl), which consists of NAT behaviour, public endpoint(s), private endpoint(s), and a list of relay candidates. The detection of the Cl starts with the private endpoints. An endpoint is represented by an IP address and a port number. The IP address can be obtained from the operating system, the port number can be chosen by the peer. The second peer 2 must know an endpoint of at least one first peer 1 that offers the UNSAF service. Only as a fallback solution, the second peer 2 might refer to a central server to obtain such an endpoint.

The second peer 2 sends an UNSAF request 201 from the endpoint of the second peer 2 (= private endpoint) to the UNSAF endpoint of the first peer 1. When this UNSAF request 201 passes the NAT device 21, the private endpoint specified in the UNSAF request 201 as source endpoint is replaced by the endpoint of the NAT device 21 (= allocated endpoint). This is in compliance with the basic idea behind NAT. The first peer 1, offering the UNSAF service, processes the received UNSAF request 201. The first peer 1 extracts the source endpoint, i.e., the endpoint of the NAT device 21 (= allocated endpoint), from the UNSAF request 201. The first peer 1 generates a UNSAF response 202 to the UNSAF request 201 and writes the extracted source endpoint (= allocated endpoint) as destination endpoint in the UNSAF response 202. In other words, the first peer 1 addresses the UNSAF response 202 to the allocated endpoint, i.e., the endpoint of the NAT device 21. When the UNSAF response 202 passes through the NAT 21, the destination endpoint specified in the UNSAF response 202, i.e., the allocated endpoint, is replaced by the private endpoint of the second peer 2. But the payload of the UNSAF response 202 still contains the allocated endpoint.

That means that the UNSAF response 202 contains - in the payload - the source endpoint which the first peer 1 extracted from the UNSAF request 201. The second peer 2 receives the UNSAF response 202 and checks whether this source endpoint in the payload is identical to the private endpoint where the second peer 2 sent the UNSAF request 201 from. If this source endpoint is identical to the private endpoint where the second peer 2 sent the UNSAF request 201 from, it can be concluded that the second peer 2 resides in the public address realm 101. Otherwise, the UNSAF request 201 passed through a NAT device 21. Thus, the second peer 2 resides in a private address realm 102 and needs to probe the behaviour of its NAT device 21.

The UNSAF response 202 also contains a list of endpoints of other peers known to the first peer 1, which offer the UNSAF service. That way, the second peer 2 can repeat the UNSAF process with different peers.

The invention relies on the exchange of connection information (Cl) between two peers before establishing a connection. The Cl is exchanged through messages sent via the overlay. But only peers that are already integrated into the overlay can be reached by these messages. If a new peer is about to join the overlay, it needs the assistance of a peer that is already integrated into the overlay. Basically this can be any peer that is reachable through a public address. A peer offering bootstrapping service relays messages between the joining peer and the overlay. Only peers that reside in the public realm can offer the bootstrapping service. A peer offering the bootstrapping service has to listen for bootstrapping requests on a predetermined port.

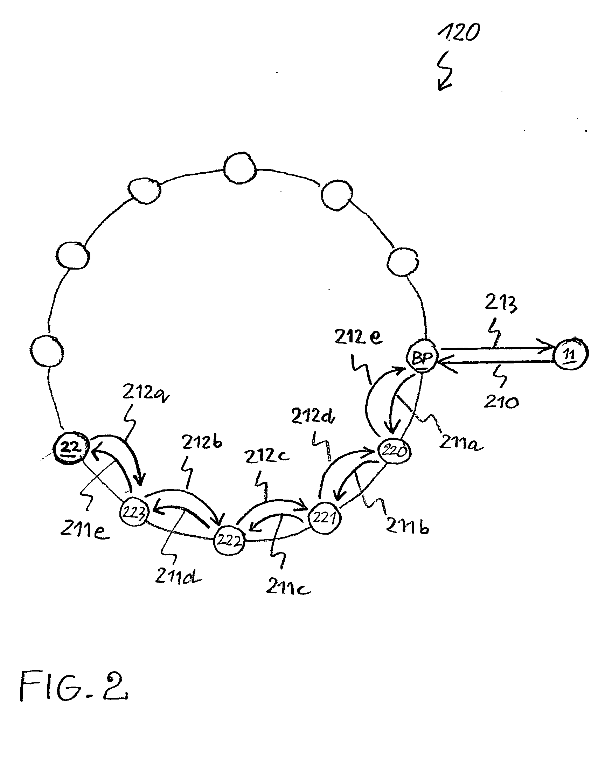

Fig. 2 shows an overlay 120 of a P2P network with a bootstrapping peer BP, a neighbour peer 22, and a plurality of other peers 220 to 223. The bootstrapping peer BP and the neighbour peer 22 are already fully integrated into the P2P overlay 120 and can receive messages via the overlay 120. A joining peer 11 is not yet integrated into the P2P overlay 120. When the joining peer 11 is joining the overlay network 120, the following two steps need to be performed. The joining peer 11 has detected its Cl and is about to join the overlay 120. Therefore, the joining peer 11 needs to establish a connection to a peer (e.g., the peer 22) with which the joining peer 11 will be sharing DHT responsibilities, as demanded by the P2P protocol (DHT = Distributed Hash Table).

The joining peer 11 sends a bootstrapping request 210 to one of the peers which were contacted during the detection of the Cl, e.g., to the bootstrapping peer BP. The bootstrapping request message 210 contains the Cl of the joining peer 11 and a peer ID of the joining peer 11, the peer ID determining the future position of the joining peer 11 in the overlay 120. Thus, the message 210 can be addressed to the neighbour peer 22. The bootstrapping peer BP forwards the Cl of the joining peer 11 to the neighbour peer 22 via the overlay 120, in a hop-by-hop routing 211 via one or more of the other peers 220 to 223 of the overlay 120. The neighbour peer 22 receives the Cl of the joining peer 11 and generates a response containing the Cl of the neighbour peer 22. The response is sent in a hop-by-hop routing 212 via one or more of the other peers 220 to 223 of the overlay 120 to the bootstrapping peer BP. Once the response from the neighbour peer 22 is received by the bootstrapping peer BP, the bootstrapping peer BP send a bootstrapping response message 213 back to the joining peer 11, the bootstrapping response message 213 containing the Cl of the neighbour peer 22. After these steps the joining peer 11 is fully integrated into the overlay 120.

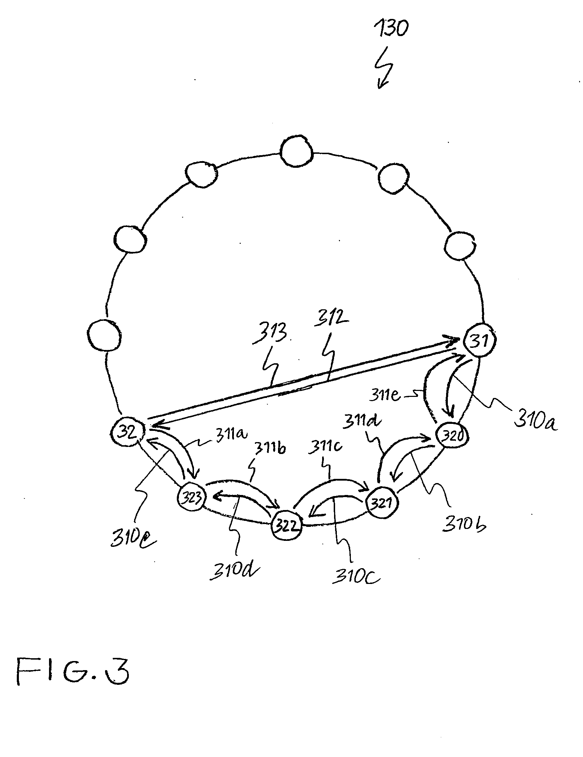

Fig. 3 shows an overlay 130 of a P2P network with a first peer 31, a second peer 32, and a plurality of other peers 320 to 323. The first peer 31 wants to establish a connection to the second peer 32. For establishment of a direct connection between the first peer 31 and the second peer 32, the following steps need to be conducted: The first peer 31 sends a connection request message 310, in a hop-by-hop routing via one or more of the other peers 320 to 323 of the overlay 130, to the second peer 32, whereby the connection request message 310 contains the Cl of the first peer 31. After receiving the connection request 310, the second peer 32 sends a connection response message 311, in a hop-by-hop routing via one or more of the other peers 320 to 323 of the overlay 130, to the first peer 31, connection response message 311 containing the Cl of the second peer 32. Then, both peers 31, 32 know the Cl of each other. Both peers 31, 32 need to evaluate the exchanged Cl to determine the optimal connection approach. It depends on the behaviour of the involved NAT devices, if a direct connection is possible. The evaluation has one of three possible results:
i) The two peers reside in the same private realm, a direct connection can be established using the private endpoints.
ii) The two peers are able to establish a direct connection using the public endpoints.
iii) The behaviour of the involved NAT devices prevent a direct connection. A third peer needs to be found that offers relay services. More details on the establishment of relayed connections can be found below.

To establish a direct connection either UNSAF derived endpoints or self perceived endpoints can be used.

If the attempt to establish a direct connection using the private endpoints fails, an attempt is made to establish a direct connection using the public endpoints.
If the attempt to establish a direct connection using the public endpoints fails, a relayed connection is established.

Fig. 3 describes the case that a direct connection can be established. A direct connection can either be established via the public endpoints or via the private endpoints, as decided during the evaluation phase. Each peer 31, 32 starts sending connect messages 312, 323 to the respective endpoint of the other peer 31, 32. The connection is established, when both peers 31, 32 have received at least one connect message. The attempt fails, if one of the peers 31, 32 is not able to receive the connect messages after multiple attempts. Once a direct connection is established, keep-alive messages need to be sent in regular periods in both directions to refresh NAT mappings and filtering rules.

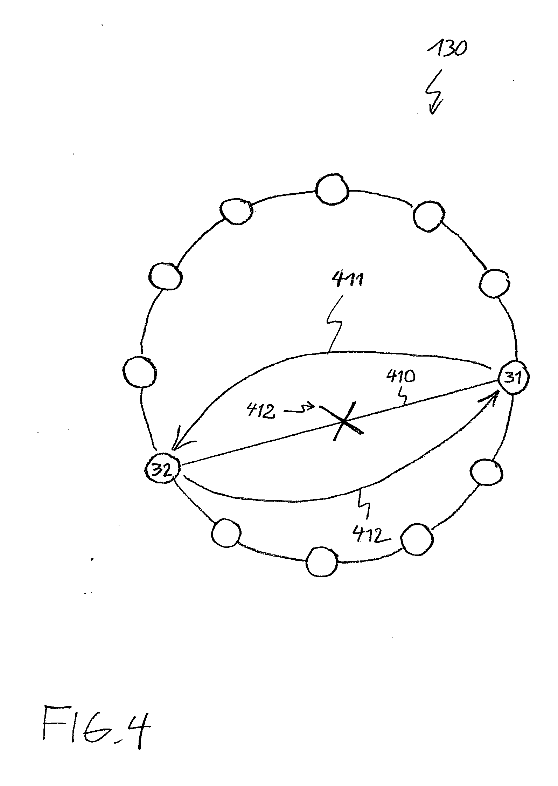

Fig. 4 illustrates the termination of a direct connection. Fig. 4 shows the overlay 130 of the P2P network with the first peer 31 and the second peer 32. Once the direct connection 410 between the first peer 31 and the second peer 32 is no longer necessary, it can be terminated to free resources of the P2P network. A connection is necessary if the P2P protocol demands for it or if this connection is part of a relay. The first peer 31 notifies the second peer 32 that the connection 410 is unnecessary by sending a de-allocate message 411. Alternatively, the first peer 31 notifies the second peer 32 that the connection 410 is necessary by sending an allocate message (not shown). When the second peer 32 has received the de-allocate message 411 from the first peer 31 and realises, that the connection 410 is no longer necessary, the second peer 31 also sends a de-allocate message 412 to the first peer. Both peers 31, 32 consider this connection 410 unnecessary, therefore it is terminated. If both peers 31, 32 consider the connection 410 unnecessary, the connection is terminated.

If one of the peers 31, 32 is about to leave the overlay 130, it sends a terminate message to the other to close the connection 410. If no keep-alive message has been received for a specific duration, the connection 410 is also terminated.

In some cases, a direct connection between two peers can not be established. Then the two peers require the help of a third peer which relays the connection between the two (relayed connection establishment). A relayed connection from a first peer to a second peer is constructed of direct connections from the first peer to a relay peer and from the second peer to the relay peer, whereby the relay peer is a peer offering relay services. Each peer maintains a list of relay candidates. There are certain requirements a peer must fulfil in order to become a relay candidate: the peer must not be behind a NAT with ADM, PDM or PDF behaviour. When a peer establishes a direct connection to another peer and that other peer fulfils the aforementioned requirements, the other peer is added to the list of relay candidates. This list is exchanged along with the Cl when establishing a connection.

When a relayed connection is needed between two peers, first the optimal relay needs to be discovered. During the exchange of connection information, the two peers also exchange relay candidates as part of the connection information. Each of the exchanged Cl of the two peers contains a list of relay candidates. The two lists of the peers are merged. Therefore, each peer that is integrated into the overlay must be knowing at least one relay candidate. And peers that are about to join the overlay know a bootstrapping peer which must reside in the public realm. Still, a fall back solution might be necessary to discover peers which offer relay services. After exchanging connection information, the two peers have both the same list of relay candidates.

Each relay candidate on the list is rated to decide which relay candidate should be contacted first. Preferably, the relay candidates on the list are rated with heuristic values. Two suitable values for rating are reusing and concentration:

The value of reusing existing connections is based on the aim to optimise network traffic. To minimise the stress on the network, it is best to reuse direct connections that are already established as part of a relayed connection. Connections that have been already established should be reused. If both peers have already established a connection to a relay candidate, that peer would be optimal and the reuse of connections would be maximised. It is still a bonus if one of the peers has established a connection.

According to a preferred embodiment of the invention, the value for reusing is one if the local peer has an active direct connection to the relay candidate. It is two if after the exchange of connection information it is known that both peers have an active connection to the same relay candidate. So relay candidates that have already established direct connections to both peers are preferred over those that have only a direct connection to one of the two.

The value of concentration of relayed connections is concerned with diversification. If a peer establishes all connections that need a relay via the same relaying peer and that peer leaves the network, all connections have to be re-established. Therefore, it is better to diversify the relayed connections on multiple peers, i.e., to spread the relayed connections on different relaying peers. So a relay candidate with less active relayed connections is better than one that has more connections. According to a preferred embodiment of the invention, the value for concentration is equal to the number of relayed connections that have been established via this relay candidate and are active.

For a signalling relay, values like latency or bandwidth are irrelevant because signalling traffic, unlike media traffic, is neither time critical nor bandwidth consuming. Once it is determined that a relayed connection needs to be established, it is the task of the requesting peer to select an appropriate relay candidate from the list. The list is composed of the relay candidates from the connection information of the requesting peer combined with the relay candidates of the responding peer.

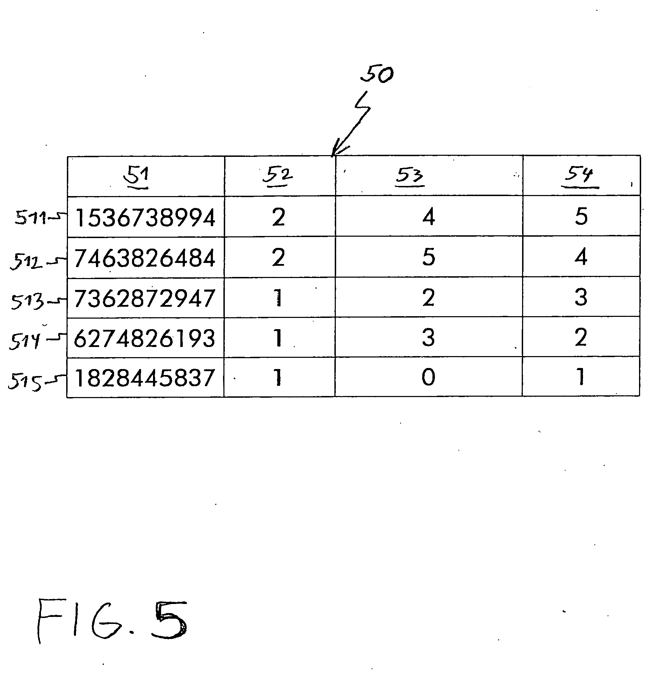

Preferably, the list is sorted using heuristic values: reusing is the primary sort criterion followed by concentration. The higher the reusing value, the higher is the ranking of a relay candidate in the list. The lower the concentration value, the higher is the ranking. An example of a sorted list is displayed in Fig. 5. The list 50 comprises four columns 51 to 54 and five lines 511 to 515. The column 51 gives the peer ID of five relay candidates. The column 52 gives the reusing values attributed to the five relay candidates. The column 53 gives the concentration values attributed to the five relay candidates. The column 54 gives the ranking of each of the five relay candidates, the highest rated relay candidate positioned on top.

The requesting peer then tries to establish a relayed connection with the highest rated candidate in line 511. If that fails (e.g., the relay candidate denies the request or is not responding at all), the list 50 is processed downwards line for line until a connection could be established. That means the requesting peer tries to establish a relayed connection with the second rated candidate in line 512, the third rated candidate in line 513, and so on, until a connection could be established.

Once the requesting peer has ranked the relay candidates and an appropriate candidate was chosen, the relay candidate needs to be contacted. A relayed connection is established similar to a direct connection.

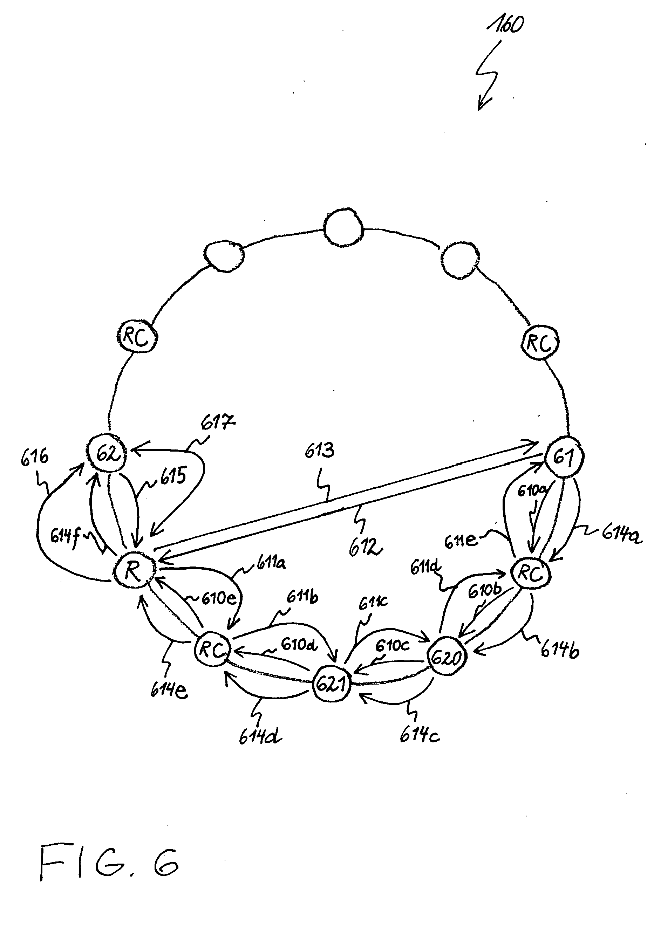

Fig. 6 shows an overlay 160 of a P2P network with a first peer 61, a second peer 62, a relay peer R chosen by the first peer 61 as the highest ranked relay candidate, and a plurality of other relay candidates RC and other peers 620, 621. Both, the first peer 61 and the second peer 62 are in separate private address realms. They are already fully integrated into the P2P overlay 160 and can exchange messages with other peers of the P2P overlay 160 via hop-by-hop routing. The relay peer R can be either in a private address realm or in the public address realm, as long as the relay peer R fulfils the requirements to be a relay. Once a relay candidate is selected from the list of relay candidates, both, the first peer 61 and the second peer 62 need to establish a direct connection to the relay peer R.

The first peer 61 sends a relayed connection request 610 to the relay peer R via the P2P overlay 160, in a hop-by-hop routing via one or more of the other relay candidates RC and/or the other peers 620, 621 of the peer-to-peer network 160. The relayed connection request 610 contains connection information of the first peer 61 and the same connection ID that was used in a connection information exchange between the first peer 61 and the second peer 62. The relay peer R answers with a relayed connection response 611, sent to the first peer 61 in a hop-by-hop routing via one or more of the other relay candidates RC and/or the other peers 620, 621 of the peer-to-peer network 160. The relayed connection response 611 contains the connection information of the relay peer R and the connection ID. By sending its connection information, the relay peer R signalises that it accepts the relay request 610. If the relayed connection response 611 contained only the ID, the request 610 would be denied by the relay peer R. If the relay peer R denied/declined the relay connection request 610 of the first peer 61, the first peer 61 would need to find a new relay candidate.

After the relay peer R has signalised that it accepts the relay request 610, the first peer 61 and the relay peer R try to establish a direct connection between each other by sending connect messages 612, 613 to each other, i.e., to their respective exchanged endpoints. If the first peer 61 cannot establish a direct connection to the relay peer R, the first peer 61 needs to find a new relay candidate.

Given that the establishment of a direct connection between the first peer 61 and the relay peer R has succeeded, the first peer 61 needs to inform the second peer 62 that a relay candidate has been found, i.e., that the relay peer R has accepted to fulfil the function as a relay peer. This is achieved by sending a relay discovered message 614 via the P2P overlay 160, in a hop-by-hop routing via one or more of the other relay candidates RC and/or the other peers 620, 621 of the peer-to-peer network 160. The relay discovered message 614 contains the peer ID of the relay peer R and the connection ID. After receiving the relay discovered message 614, the second peer 62 tries to establish a direct connection to the relay peer R, in a manner as described above: The second peer 62 sends a relayed connection request 615 to the relay peer R, the relayed connection request 615 containing the connection information of the second peer 62. In response to the relayed connection request 615, the relay peer R sends a relayed connection response 616 comprising connection information of the relay peer R to the second peer 62. After the exchange of the connection information between the second peer 62 and the relay peer R, each peer 62, R starts sending connect messages to the respective endpoint of the other peer R, 62. A direct connection 617 is established between the second peer 62 and the relay peer R when both peers 62, R have received at least one connect message. The direct connection 617 is only established if no direct connection between the second peer 62 and the relay peer R is already established.

So basically, both peers, the first peer 61 requesting and the second peer 62 responding, need to initialise the connection attempt to the relay peer R. That way, the relay peer R cannot be utilised in an attack on another peer because no messages are sent to the second peer 62 until the relayed connection request 615 is received from the second peer 62. The relay peer R identifies the relay connection requests by the transmitted connection ID. Once a direct connection to both peers 61, 62 could be established, the connections need to be linked logically, so that messages that are sent from the first peer 61 to the second peer 62, and vice versa, are forwarded correctly.

The process can be skipped partially, if a direct connection between the first peer 61 and the relay peer R or between the second peer 62 and the relay peer R is already established. In that case, the relay connection request and response still have to be exchanged to notify the relay peer R that this connection is now part of a relay but the direct connection does not need to be re-established. For the relay peer R, establishing a relayed connection is equivalent to logically linking two direct connections. This linking is necessary for two purposes:
i) To keep track of the connection status of the two direct connections, in order to notify the second peer 62, if the connection with the first peer 61 was lost.
ii) To keep track of the necessity of the two direct connections.

The linking is not necessary to route overlay messages. Every overlay message contains a destination peer ID, which is used to determine the next hop of the routing. The routing algorithm processes the list of direct connections and selects the one, that leads closest to the destination ID. So, rather than being used for routing, the linking is used to keep the direct connections alive.

If the relay peer R declines the relay connection request 615 of the second peer 62, the second peer 62 has to send a relay connection failed message to the first peer 61 so that the first peer 61 can try to find a new relay candidate. If the second peer 62 can not establish a direct connection to the relay peer R, the second peer 62 needs to send a relay connection failed message to the first peer 61 so that the first peer 61 can try to find a new relay candidate.

Once a relayed connection is no longer necessary, it can be terminated. As with direct connections, the two peers at the end, but not the relaying peer, can declare the connection unnecessary by sending a de-allocate relay message.

Respectively, an allocate relay message declares the connection necessary. When both peers have declared the connection unnecessary, the relay connection is terminated. The relay connection is also terminated if one of the three peers leaves the overlay. After terminating the relay, it has to be evaluated whether the two direct connections that were part of the relay are still necessary.

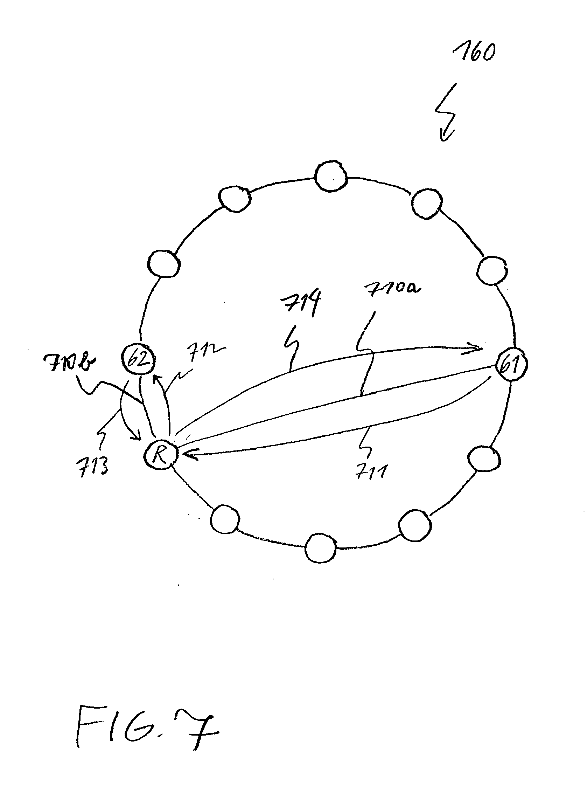

Figure 7 illustrates the process, showing the overlay 160 of a P2P network with the first peer 61, the second peer 62, and the relay peer R. A relayed connection 710 is established between the first peer 61 and the second peer 62. The relayed connection 710 consists of a direct connection 710a between the first peer 61 and the relay peer R and a direct connection 710b between the second peer 62 and the relay peer R.

The first peer 61 sends a de-allocate relay message 711 to the relay peer R, declaring the relayed connection 710 unnecessary. The relay peer R forwards 712 the de-allocate relay message 711 sent by the first peer 61 to the second peer 62. After some time, the second peer 62 also sends a de-allocate relay message 713 to the relay peer R. The relay peer R forwards 714 the de-allocate relay message 713 sent by the second peer 62 to the first peer 61. As neither the first peer 61 nor the second peer 62 consider the relay 710 necessary, the relay connection 710 is terminated. The necessity of each of the direct connections 710a, 710b needs to be evaluated.

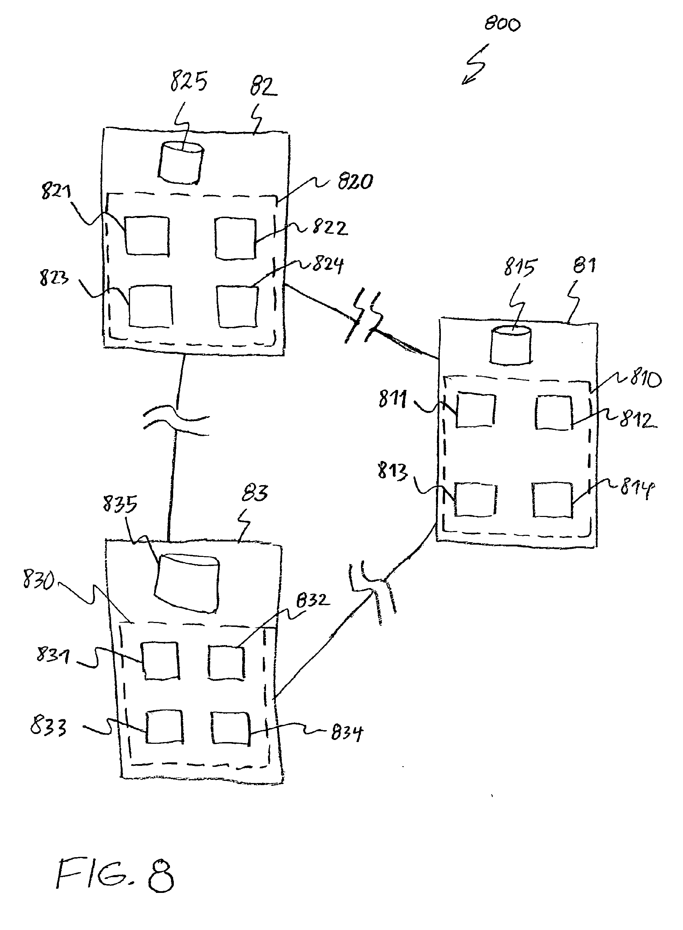

Fig. 8 shows a peer-to-peer network 800 comprising a first peer 81 and a relay peer 83, both in a first address realm of the peer-to-peer network 800, and a second peer 82 in a second address realm of the peer-to-peer network 800. The first peer 81 wants to establish a connection to the second peer 82.

Because a direct connection between the first peer 81 and the second peer 82 is impossible because the second peer 82 is behind a NAT device, e.g., a firewall (not shown), located at the border between the first address realm and the second address realm, a relayed connection between the first peer 81 and the second peer 82 is established via the relay peer 83.

Each of the peers 81, 82, 83 is composed of one or several inter-linked computers, i.e., a hardware platform, a software platform basing on the hardware platform and several application programs executed by the system platform formed by the software and hardware platform. The functionality of each of the peers 81, 82, 83 is provided by the execution of these application programs. The application programs or a selected part of these application programs constitute a computer software product providing a connection establishment service as described above, when executed on the system platform. Further, such computer software product is constituted by a storage medium storing these application programs or said selected part of application programs.

Preferably, the peers 81, 82, 83 are stand-alone network nodes, e.g., individual personal computers located at different physical locations and connected to each other via a telecommunications network, e.g., a telephone and media transport network or the Internet.

From a functional point of view, the first peer 81 comprises a discovering unit 811 for discovering in the peer-to-peer network 800 a network address translation preventing the direct connection between the first peer 81 and the second peer 82. Furthermore, the first peer 81 comprises a determination unit 812 for determination of a third peer of the peer-to-peer network 800 as a relay peer 83. Moreover, the first peer 81 comprises a relay unit 813 for support of a relay of the connection between the first peer 81 and the second peer 82. And, the first peer 81 comprises propagation means 814, e.g., a transceiver interface, for propagation of information within the peer-to-peer network 800. In addition, the first peer 81 comprises a memory unit 815 for storing a computer software product which, when executed by a CPU of the first peer 81, performs the functions of the first peer 81 (CPU = Central Processing Unit).

Preferably, the discovering unit 811, the determination unit 812, the relay unit 813, and the propagation means 814 are software components and/or hardware components of a control unit 810 controlling the function of the first peer 81. It is also possible that the discovering unit 811, the determination unit 812, the relay unit 813, and the propagation means 814 are separate units connected to a control unit 810. Preferably, the control unit 810 also comprises said CPU.

In analogy to the design of the first peer 81, also the second peer 82 and the relay peer 83 comprise respective discovering units 821 and 831, respective determination units 822 and 832, respective relay units 823 and 833, respective propagation means 824 and 834, and respective memory units 825 and 835. In another scenario, the roles of the peers 81, 82, 83 within the P2P network 800 may change. For example, the relay peer 83 may represent a responding peer, the first peer 81 may represent a relay peer, and the second peer 82 may represent a requesting peer. Therefore, each of the peers 81, 82, 83 comprises all of the mentioned functional components.

## Claims

1. A method of establishing a connection between a first peer (61) in a first address realm of a peer-to-peer network (160) and a second peer (62) in a second address realm of the peer-to-peer network (160),
**characterised in**
**that** the method comprises the steps of:
discovering in the peer-to-peer network (160) a network address translation preventing a direct connection between the first peer (61) and the second peer (62);
determining a third peer of the peer-to-peer network (160) as a relay peer (R); and
relaying, by the relay peer (R), the connection between the first peer (61) and the second peer (62).

2. The method of claim 1,
**characterised in**
**that** the method comprises the step of:
discovering said network address translation based on a topology of the peer-to-peer network (160) and connection information, said connection information comprising a specification of a behaviour of the network address translation, an endpoint associated with the first peer (61) in the first address realm, and an endpoint associated with the second peer (62) in the second address realm.

3. The method of claim 1,
**characterised in**
**that** the method comprises the step of:
exchanging respective connection information of the first peer (61) and the second peer (62) between the first peer (61) and the second peer (62) in a hop-by-hop routing via one or more other peers of the peer-to-peer network (160).

4. The method of claim 1,
**characterised in**
**that** the method comprises the steps of:
sending, by the first peer (61), a relayed connection request (610) comprising connection information of the first peer (61) to the relay peer (R);
sending, by the relay peer (R), a relayed connection response (611) comprising connection information of the relay peer (R) to the first peer (61);
establishing a direct connection (612, 613) between the first peer (61) and the relay peer (R) if no direct connection between the first peer (61) and the relay peer (R) is already established;
sending, by the first peer (61), a relay discovered message (614) comprising a peer identifier of the relay peer (R) to the second peer (62);
sending, by the second peer (62), a relayed connection request (615) comprising connection information of the second peer (62) to the relay peer (R);
sending, by the relay peer (R), a relayed connection response (616) comprising connection information of the relay peer (R) to the second peer (62); and
establishing a direct connection (617) between the second peer (62) and the relay peer (R) if no direct connection between the second peer (62) and the relay peer (R) is already established.

5. The method of claim 1,
**characterised in**
**that** the method comprises the steps of:
selecting the relay peer (R) from a list (50) of one or more relay candidates (RC), the list provided by the first peer (61) and/or the second peer (62), whereby the choice is based on one or more of the following steps:
choosing a relay candidate (RC) where one or more direct connections that are already established in the peer-to-peer network (160) can be re-used for the relayed connection between the first peer (61) and the second peer (62); and
preferring a relay candidate (RC) engaged in less relay connections than another relay candidate (RC).

6. The method of claim 1,
**characterised in**
**that** the method further comprises the steps of:
sending a bootstrapping request (210) comprising connection information of the first peer (11) to a peer (BP) in a publicly reachable address realm of the peer-to-peer network (120) whereby the peer (BP) in the publicly reachable address realm of the peer-to-peer network (120) serves as a bootstrapping peer; and
relaying, by the bootstrapping peer (BP), messages exchanged between the first peer (11) and the second peer (22).

7. The method of claim 1,
**characterised in**
**that** the method further comprises the step of:
terminating the relayed connection (710) by sending, by the first peer (61), a de-allocate relay message (711) to the relay peer (R), the de-allocate relay message (711) declaring the relayed connection (710) unnecessary;
forwarding (712), by the relay peer (R), the de-allocate relay message (711) received from the first peer (61) to the second peer (62);
sending, by the second peer (62), a de-allocate relay message (713) to the relay peer (R);
forwarding (714), by the relay peer (R), the de-allocate relay message (713) received from the second peer (62) to the first peer (61); and after receiving the forwarded de-allocate relay message (714) at the first peer (61), terminating the relayed connection (710).

8. A peer (81, 82, 83) of a peer-to-peer network (800) comprising one or more peers (81) in a first address realm of the peer-to-peer network (800) and one or more peers (82) in a second address realm of the peer-to-peer network (800),
**characterised in**
**that** the peer (81, 82, 83) comprises discovering means (811, 821, 832) adapted to discover, in the peer-to-peer network (800), a network address translation preventing a direct connection between the peer (81) and a peer (82) of another address realm; determination means (812, 822, 832) adapted to determine a peer (83) of the peer-to-peer network (800) as a relay peer; relay means (812, 822, 832) adapted to support a relay of a connection between a first peer (81) in the first address realm of the peer-to-peer network (800) and a second peer (82) in the second address realm of the peer-to-peer network (800); and propagation means (812, 822, 832) adapted to propagate information, in particular connection information, in the peer-to-peer network (800).

9. A telecommunication infrastructure comprising a peer-to-peer network (160) with a first peer (61) in a first address realm of the peer-to-peer network (160) and a second peer (62) in a second address realm of the peer-to-peer network (160),
**characterised in**
**that** the telecommunication infrastructure further comprises a network address translation preventing a direct connection between the first peer (61) and the second peer (62), and a third peer of the peer-to-peer network (160) determined as a relay peer (R) adapted to relay the connection between the first peer (61) and the second peer (62).

10. A computer program product for establishing a connection in a peer-to-peer network (800) comprising one or more peers (81) in a first address realm of the peer-to-peer network (800) and one or more peers (82) in a second address realm of the peer-to-peer network (800),
**characterised in**
**that** the computer program product, when executed by a peer (81, 82, 83) of the peer-to-peer network (800), performs the steps of:
discovering, in the peer-to-peer network (800), a network address translation preventing a direct connection between the peer (81) and a peer (82) of another address realm;
determining a peer (83) of the peer-to-peer network (800) as a relay peer;
supporting a relay of a connection between a first peer (81) in the first address realm of the peer-to-peer network (800) and a second peer (82) in the second address realm of the peer-to-peer network (800); and
propagating information, in particular connection information, in the peer-to-peer network (800).

## Amended claims

### Amended claims in accordance with Rule 137(2) EPC.

**1.** A method of establishing a connection between a first peer (61) in a first address realm of a peer-to-peer network (160) and a second peer (62) in a second address realm of the peer-to-peer network (160),
the method comprising the steps of:
discovering in the peer-to-peer network (160) a network address translation preventing a direct connection between the first peer (61) and the second peer (62);
determining a third peer of the peer-to-peer network (160) as a relay peer (R); and
relaying, by the relay peer (R), the connection between the first peer (61) and the second peer (62),
**characterised in**
**that** the method further comprises the steps of:
selecting the relay peer (R) from a list (50) of one or more relay candidates (RC), the list provided by the first peer (61) and/or the second peer (62), whereby the choice is based on one or more of the following steps:
choosing a relay candidate (RC) where one or more direct connections that are already established in the peer-to-peer network (160) can be re-used for the relayed connection between the first peer (61) and the second peer (62); and
preferring a relay candidate (RC) engaged in less relay connections than another relay candidate (RC).

**2.** The method of claim 1,
**characterised in**
**that** the method comprises the step of:
discovering said network address translation based on a topology of the peer-to-peer network (160) and connection information, said connection information comprising a specification of a behaviour of the network address translation, an endpoint associated with the first peer (61) in the first address realm, and an endpoint associated with the second peer (62) in the second address realm.

**3.** The method of claim 1,
**characterised in**
**that** the method comprises the step of:
exchanging respective connection information of the first peer (61) and the second peer (62) between the first peer ( 61) and the second peer (62) in a hop-by-hop routing via one or more other peers of the peer-to-peer network (160).

**4.** The method of claim 1,
**characterised in**
**that** the method comprises the steps of:
sending, by the first peer (61), a relayed connection request (610) comprising connection information of the first peer (61) to the relay peer (R);
sending, by the relay peer (R), a relayed connection response (611) comprising connection information of the relay peer (R) to the first peer (61);
establishing a direct connection (612, 613) between the first peer (61) and the relay peer (R) if no direct connection between the first peer (61) and the relay peer (R) is already established;
sending, by the first peer (61), a relay discovered message (614) comprising a peer identifier of the relay peer (R) to the second peer (62);
sending, by the second peer (62), a relayed connection request (615) comprising connection information of the second peer (62) to the relay peer (R);
sending, by the relay peer (R), a relayed connection response (616) comprising connection information of the relay peer (R) to the second peer (62); and
establishing a direct connection (617) between the second peer (62) and the relay peer (R) if no direct connection between the second peer (62) and the relay peer (R) is already established.

**5.** The method of claim 1,
**characterised in**
**that** the method further comprises the steps of:
sending a bootstrapping request (210) comprising connection information of the first peer (11) to a peer (BP) in a publicly reachable address realm of the peer-to-peer network (120) whereby the peer (BP) in the publicly reachable address realm of the peer-to-peer network (120) serves as a bootstrapping peer; and
relaying, by the bootstrapping peer (BP), messages exchanged between the first peer (11) and the second peer (22).

**6.** The method of claim 1,
**characterised in**
**that** the method further comprises the step of:
terminating the relayed connection (710) by sending, by the first peer (61), a de-allocate relay message (711) to the relay peer (R), the de-allocate relay message (711) declaring the relayed connection (710) unnecessary;
forwarding (712), by the relay peer (R), the de-allocate relay message (711) received from the first peer (61) to the second peer (62); sending, by the second peer (62), a de-allocate relay message (713) to the relay peer (R);
forwarding (714), by the relay peer (R), the de-allocate relay message (713) received from the second peer (62) to the first peer (61); and
after receiving the forwarded de-allocate relay message (714) at the first peer (61), terminating the relayed connection (710).

**7.** A peer (81, 82, 83) of a peer-to-peer network (800) comprising one or more peers (81) in a first address realm of the peer-to-peer network (800) and one or more peers (82) in a second address realm of the peer-to-peer network (800),
whereby the peer (81, 82, 83) comprises discovering means (811, 821, 832) adapted to discover, in the peer-to-peer network (800), a network address translation preventing a direct connection between the peer (81) and a peer (82) of another address realm; determination means (812, 822, 832) adapted to determine a peer (83) of the peer-to-peer network (800) as a relay peer; relay means (812, 822, 832) adapted to support a relay of a connection between a first peer (81) in the first address realm of the peer-to-peer network (800) and a second peer (82) in the second address realm of the peer-to-peer network (800); and propagation means (812, 822, 832) adapted to propagate information, in particular connection information, in the peer-to-peer network (800),
**characterised in**
**that** the determination means (812, 822, 832) are further adapted to select the relay peer (R) from a list (50) of one or more relay candidates (RC), the list provided by the peer (81, 82, 83), whereby the choice is based on one or more of the following steps:
choosing a relay candidate (RC) where one or more direct connections that are already established in the peer-to-peer network (160) can be re-used for the relayed connection between the first peer (81) and the second peer (82); and
preferring a relay candidate (RC) engaged in less relay connections than another relay candidate (RC).

**8.** A telecommunication infrastructure comprising a peer-to-peer network (160) with a first peer (61) in a first address realm of the peer-to-peer network (160) and a second peer (62) in a second address realm of the peer-to-peer network (160),
whereby the telecommunication infrastructure further comprises a network address translation preventing a direct connection between the first peer (61) and the second peer (62), and a third peer of the peer-to-peer network (160) determined as a relay peer (R) adapted to relay the connection between the first peer (61) and the second peer (62),
**characterised in**
**that** the the first peer (61) and/or the second peer (62) are adapted to select the relay peer (R) from a list (50) of one or more relay candidates (RC), the list provided by the first peer (61) and/or the second peer (62), whereby the choice is based on one or more of the following steps:
choosing a relay candidate (RC) where one or more direct connections that are already established in the peer-to-peer network (160) can be re-used for the relayed connection between the first peer (81) and the second peer (82); and
preferring a relay candidate (RC) engaged in less relay connections than another relay candidate (RC).

**9.** A computer program product for establishing a connection in a peer-to-peer network (800) comprising one or more peers (81) in a first address realm of the peer-to-peer network (800) and one or more peers (82) in a second address realm of the peer-to-peer network (800),
whereby the computer program product, when executed by a peer (81, 82, 83) of the peer-to-peer network (800), performs the steps of:
discovering, in the peer-to-peer network (800), a network address translation preventing a direct connection between the peer (81) and a peer (82) of another address realm;
determining a peer (83) of the peer-to-peer network (800) as a relay peer;
supporting a relay of a connection between a first peer (81) in the first address realm of the peer-to-peer network (800) and a second peer (82) in the second address realm of the peer-to-peer network (800); and
propagating information, in particular connection information, in the peer-to-peer network (800),
**characterised in**
**that** the computer program product further performs the steps:
selecting the relay peer (R) from a list (50) of one or more relay candidates (RC), the list provided by the first peer (61) and/or the second peer (62), whereby the choice is based on one or more of the following steps:
choosing a relay candidate (RC) where one or more direct connections that are already established in the peer-to-peer network (160) can be re-used for the relayed connection between the first peer (61) and the second peer (62); and
preferring a relay candidate (RC) engaged in less relay connections than another relay candidate (RC).
